# EUROPEAN PATENT APPLICATION

(11) **EP 4 683 373 A1**
(43) Date of publication of application: **21.01.2026**
(21) Application number: 24784296.6
(22) Date of filing: 02.04.2024
(51) Int. Cl.: H04W 24/02

(54) **COMMUNICATION METHOD AND APPARATUS**

(30) Priority: 06.04.2023 CN 202310384194
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); CHEN, Jun, Shenzhen, Guangdong 518129 (CN)
(74) Representative: Gill Jennings & Every LLP
(86) International application number: PCT/CN2024/085600
(87) International publication number: WO 2024/208213

(57) **Abstract**

Embodiments of this application provide a communication method and apparatus. The method may be used for updating an AI model. In the method, when an AI model currently used by a first device and a second device needs to be updated, the first device may send, to a core network device, requirement information for updating the AI model, and the core network device may determine updated AI model information based on the requirement information proposed by the first device. In this way, the first device and the second device can update the AI model based on the updated AI model information. This improves application effect of the AI model.

## Description

This application claims priority to Chinese Patent Application No. 202310384194.9, filed with the China National Intellectual Property Administration on April 6, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With improvement of data storage and computing capabilities, an artificial intelligence (artificial intelligence, AI) technology is increasingly used. The AI technology can be applied to communication systems such as a new radio (new radio, NR) system, to improve network performance and user experience by intelligently collecting and analyzing data.

AI application scenarios on a plurality of radio access network (radio access network, RAN) sides are introduced into the 3rd generation partnership project (3rd generation partnership project, 3GPP). AI models used in some AI application scenarios may be used in a terminal device side and an access network device side. Therefore, in a possible AI model transmission mode, a core network device may separately transmit an AI model to the terminal device and the access network device. After transmission of the AI model is completed, in an application process of the AI model, performance of the AI model may deteriorate due to mobility of the terminal device and a time-varying wireless environment, or the AI model cannot continue to be used due to problems such as area permission. However, the core network device cannot perceive the change, and consequently, the AI model cannot be updated in a timely manner, affecting application effect of the AI model in the AI application scenarios.

### SUMMARY

Embodiments of this application provide a communication method and apparatus, so that a core network device updates an AI model in a timely manner, to improve application effect of the AI model.

According to a first aspect, a communication method is provided, and is applied to a first device. The method may be performed by the first device, or may be performed by a component (for example, a chip or a circuit) of the first device. This is not limited. For ease of description, the following uses an example in which the first device performs the method for description.

The method may include: sending a first request message to a core network device, where the first request message is used to request to update artificial intelligence AI model information, and the first request message includes first requirement information for updating the AI model information; and receiving first update information from the core network device, where the first update information is obtained based on the first requirement information or second requirement information, and the second requirement information is requirement information that is for updating the AI model information and that is obtained by the first device through negotiation with the core network device based on the first requirement information.

In the foregoing technical solution, when an AI model currently used by the first device and a second device needs to be updated due to problems such as performance deterioration and/or area permission, the first device may send, to the core network device, the requirement information for updating the AI model, so that the core network device may indicate, based on the requirement information proposed by the first device, the first device to update the AI model. In this way, application effect of the AI model is improved.

With reference to the first aspect, in some implementations of the first aspect, the first update information includes a first identifier, and the first identifier indicates information that is in updated AI model information and that is transmitted by the second device to the first device.

According to the foregoing technical solution, when a transmission resource from the core network device to the first device is limited, the second device may assist the core network device in completing transmission of corresponding information. This reduces time occupied by a process in which the core network device transmits the updated AI model information to the first device, thereby improving transmission efficiency.

With reference to the first aspect, in some implementations of the first aspect, when the information indicated by the first identifier is partial information in the updated AI model information, the first update information further includes remaining information other than the information corresponding to the first identifier in the updated AI model information.

With reference to the first aspect, in some implementations of the first aspect, the first update information includes the updated AI model information.

With reference to the first aspect, in some implementations of the first aspect, the first update information further includes a second identifier, and the second identifier indicates information that is in the updated AI model information and that is transmitted by the first device to a second device.

According to the foregoing technical solution, when a transmission resource from the core network device to the second device is limited, the first device may assist the core network device in completing transmission of corresponding information. This reduces time occupied by a process in which the core network device transmits the updated AI model information to the second device, thereby improving transmission efficiency.

With reference to the first aspect, in some implementations of the first aspect, the method further includes: sending first indication information to the second device, where the first indication information indicates transmission progress of the information corresponding to the second identifier.

According to the foregoing technical solution, when the first device assists the core network device in sending the corresponding information to the second device, the first device may learn of current information transmission progress, and further, the first device may indicate the information transmission progress to the second device. In this way, the first device and the second device can quickly enable an updated AI model after completing receiving and update of the AI model.

With reference to the first aspect, in some implementations of the first aspect, the method further includes: receiving second indication information from the second device, or receiving third indication information from the core network device, where the second indication information or the third indication information indicates first transmission progress, and the first transmission progress is transmission progress of information that is in the updated AI model information and that is transmitted by the core network device to the second device.

According to the foregoing technical solution, the first device may learn of transmission progress of the updated AI model information between the first device and the core network device and between the first device and the second device. In this way, the first device and the second device can quickly enable the updated AI model after completing receiving and update of the AI model.

With reference to the first aspect, in some implementations of the first aspect, the first update information is determined based on the second requirement information, and the method further includes: receiving the second requirement information from the core network device; and sending fourth indication information to the core network device, where the fourth indication information indicates that the second requirement information is accepted.

With reference to the first aspect, in some implementations of the first aspect, the method further includes: receiving a first request response message from the core network device, where the first request response message indicates that the first request message is rejected.

With reference to the first aspect, in some implementations of the first aspect, the method further includes: receiving a first request response message from the core network device, where the first request response message indicates that third requirement information is accepted, and the third requirement information is requirement information corresponding to the first update information.

It may be understood that when the first update information is determined based on the first requirement information, the third requirement information herein is the first requirement information; or when the first update information is determined based on the second requirement information, the third requirement information herein is the second requirement information.

With reference to the first aspect, in some implementations of the first aspect, the method further includes: receiving fourth requirement information from the core network device, where the fourth requirement information is requirement information that is for updating the AI model information and that is determined based on the first requirement information; and determining the third requirement information through negotiation with the second device based on the fourth requirement information; sending fifth indication information to the core network device, where the fifth indication information includes the third requirement information.

It should be noted that the fourth requirement information in the foregoing technical solution is requirement information different from both the first requirement information and the second requirement information. When requirement information in the fifth indication information is the first requirement information, it may be understood that the first device expects the core network device to still perform a subsequent AI model update procedure based on initial requirement information.

With reference to the first aspect, in some implementations of the first aspect, the method further includes: determining the first requirement information, or determining the first requirement information through negotiation with the second device.

With reference to the first aspect, in some implementations of the first aspect, the first requirement information includes at least one of the following parameters: a reason for updating the AI model information, identification information of a to-be-updated AI model, information about an expectedly updated target AI model, or a transmission mode in which the core network device sends the updated AI model information to the first device and/or the second device.

With reference to the first aspect, in some implementations of the first aspect, the first device is an access network device, and the second device is a terminal device; or the first device is a terminal device, and the second device is an access network device.

According to a second aspect, a communication method is provided, and is applied to a core network device. The method may be performed by the core network device, or may be performed by a component (for example, a chip or a circuit) of the core network device. This is not limited. For ease of description, the following uses an example in which the core network device performs the method for description.

The method may include: receiving a first request message from a first device, where the first request message is used to request to update artificial intelligence AI model information, and the first request message includes first requirement information for updating the AI model information; and sending first update information to the first device, and sending second update information to a second device, where the first update information and the second update information are separately obtained based on the first requirement information or second requirement information, and the second requirement information is requirement information that is for updating the AI model information and that is obtained by the first device through negotiation with the core network device based on the first requirement information.

In the foregoing technical solution, when an AI model currently used by the first device and the second device needs to be updated due to problems such as performance deterioration and/or area permission, the core network device may receive, from the first device, the requirement information for updating the AI model, the core network device may indicate, based on the requirement information proposed by the first device, the first device and the second device to update the AI model. In this way, application effect of the AI model is improved.

For example, the first device is an access network device, and the second device is a terminal device; or the first device is a terminal device, and the second device is an access network device.

With reference to the second aspect, in some implementations of the second aspect, the first update information and the second update information each include updated AI model information.

With reference to the second aspect, in some implementations of the second aspect, the first update information includes a first identifier, the second update information includes updated AI model information and the first identifier, and the first identifier indicates information that is in the updated AI model information and that is transmitted by the second device to the first device.

With reference to the second aspect, in some implementations of the second aspect, when the information indicated by the first identifier is partial information in the updated AI model information, the first update information further includes remaining information other than the information corresponding to the first identifier in the updated AI model information.

With reference to the second aspect, in some implementations of the second aspect, the first update information includes updated AI model information and a second identifier, the second update information includes the second identifier, and the second identifier indicates information that is in the updated AI model information and that is transmitted by the first device to the second device.

With reference to the second aspect, in some implementations of the second aspect, when the information indicated by the second identifier is partial information in the updated AI model information, the second update information further includes remaining information other than the information corresponding to the second identifier in the updated AI model information.

With reference to the second aspect, in some implementations of the second aspect, the method further includes: sending third indication information to the first device, where the third indication information indicates first transmission progress, and the first transmission progress is transmission progress of information that is in the updated AI model information and that is transmitted by the core network device to the second device; and/or sending sixth indication information to the second device, where the sixth indication information indicates second transmission progress, and the second transmission progress is transmission progress of information that is in the updated AI model information and that is transmitted by the core network device to the first device.

According to the foregoing technical solution, the core network device may indicate the transmission progress of each other to the first device and/or the second device, so that the first device and the second device can learn of transmission progress of the updated AI model information between the core network device and the other device. In this way, the first device and the second device can quickly enable the updated AI model after completing receiving and update of the AI model.

With reference to the second aspect, in some implementations of the second aspect, if the update information is determined based on the second requirement information, the method further includes: sending the second requirement information to the first device; and receiving fourth indication information from the first device, where the fourth indication information indicates that the second requirement information is accepted.

With reference to the second aspect, in some implementations of the second aspect, the method further includes: sending a first request response message to the first device, where the first request response message indicates that the first request message is rejected.

With reference to the second aspect, in some implementations of the second aspect, the method further includes: sending a first request response message to the first device, where the first request response message indicates that third requirement information is accepted, and the third requirement information is requirement information corresponding to the first update information.

It may be understood that when the first update information is determined based on the first requirement information, the third requirement information herein is the first requirement information; or when the first update information is determined based on the second requirement information, the third requirement information herein is the second requirement information.

With reference to the second aspect, in some implementations of the second aspect, the method further includes: sending fourth requirement information to the first device, where the fourth requirement information is requirement information that is for updating the AI model information and that is determined based on the first requirement information; and receiving fifth indication information from the first device, where the fifth indication information includes the third requirement information.

It should be noted that the fourth requirement information in the foregoing technical solution is requirement information different from both the first requirement information and the second requirement information. When requirement information in the fifth indication information is the first requirement information, it may be understood that the first device expects the core network device to still perform a subsequent AI model update procedure based on initial requirement information.

With reference to the second aspect, in some implementations of the second aspect, the first requirement information includes at least one of the following parameters: a reason for updating the AI model information, identification information of a to-be-updated AI model, information about an expectedly updated target AI model, or a transmission mode in which the core network device sends the updated AI model information to the first device and/or the second device.

According to a third aspect, a communication apparatus is provided, and includes: a communication unit, configured to send a first request message to a core network device, where the first request message is used to request to update artificial intelligence AI model information, and the first request message includes first requirement information for updating the AI model information. The communication unit is further configured to receive first update information from the core network device, where the first update information is obtained based on the first requirement information or second requirement information, and the second requirement information is requirement information that is for updating AI model information and that is obtained by a first device through negotiation with the core network device based on the first requirement information.

Optionally, the communication apparatus may further include a processing unit. For example, the processing unit is configured to determine the first request message.

The communication unit may perform receiving and sending in the first aspect, and the processing unit may perform processing other than receiving and sending in the first aspect.

According to a fourth aspect, a communication apparatus is provided, and includes: a communication unit, configured to receive a first request message from a first device, where the first request message is used to request to update artificial intelligence AI model information, and the first request message includes first requirement information for updating the AI model information. The communication unit is further configured to: send first update information to the first device, and send second update information to a second device, where the first update information and the second update information are separately obtained based on the first requirement information or second requirement information, and the second requirement information is requirement information that is for updating the AI model information and that is obtained by the first device through negotiation with a core network device based on the first requirement information.

Optionally, the communication apparatus may further include a processing unit. For example, the processing unit is configured to determine the first update information and the second update information.

The communication unit may perform receiving and sending in the second aspect, and the processing unit may perform processing other than receiving and sending in the second aspect.

According to a fifth aspect, a communication apparatus is provided, and includes a processor. The processor is configured to invoke a computer program from a memory and run the computer program, to enable the communication apparatus to perform the method according to any one of the possible implementations of the first aspect or the second aspect.

Optionally, there may be one or more processors.

Optionally, the communication apparatus further includes one or more memories. The memory may be integrated with the processor, or the memory and the processor are separately disposed.

Optionally, the communication apparatus further includes a transmitter machine (transmitter) and a receiver machine (receiver).

According to a sixth aspect, a communication system is provided, and includes a first device and a core network device. The first device is configured to perform the method according to any one of the possible implementations of the first aspect, and the core network device is configured to perform the method according to any one of the possible implementations of the second aspect.

Optionally, the communication system may further include a second device.

According to a seventh aspect, a computer-readable storage medium is provided. The computer-readable storage medium stores a computer program or code. When the computer program or code is run on a computer, the computer is enabled to perform the method according to any one of the possible implementations of the first aspect or the second aspect.

According to an eighth aspect, a chip is provided, and includes at least one processor. The at least one processor is coupled to a memory. The memory is configured to store a computer program. The processor is configured to: invoke the computer program from the memory and run the computer program, to enable an apparatus on which a chip system is installed to perform the method according to any one of the possible implementations of the first aspect or the second aspect.

The chip may include an input circuit or interface for sending information or data, and an output circuit or interface for receiving information or data.

According to a ninth aspect, a computer program product is provided. The computer program product includes computer program code. When the computer program code is run on an apparatus, the apparatus is enabled to perform the method according to any one of the possible implementations of the first aspect or the second aspect.

### BRIEF DESCRIPTION OF DRAWINGS

FIG. 1 is a diagram of a communication system 100 according to an embodiment of this application;
FIG. 2 is a diagram of an architecture of an access network device according to an embodiment of this application;
FIG. 3 is a diagram of an AI application framework according to an embodiment of this application;
FIG. 4 is a schematic flowchart of a communication method according to an embodiment of this application;
FIG. 5 is a block diagram of a communication apparatus 200 according to an embodiment of this application; and
FIG. 6 is a block diagram of a communication apparatus 300 according to an embodiment of this application.

### DESCRIPTION OF EMBODIMENTS

The following describes technical solutions of embodiments in this application with reference to accompanying drawings.

The technical solutions in embodiments of this application may be applied to various communication systems such as a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, or a 5th generation (5th Generation, 5G) system like an NR system, or a future evolved communication system (for example, a 6G mobile communication system). The technical solutions in embodiments of this application may be applied to various scenarios such as vehicle-to-everything (vehicle-to-everything, V2X), internet of vehicles, machine type communication (machine type communication, MTC), internet of things (Internet of things, IoT), long term evolution-machine (long term evolution-machine, LTE-M) technology, machine-to-machine (machine-to-machine, M2M), and a non-terrestrial network (non-terrestrial network).

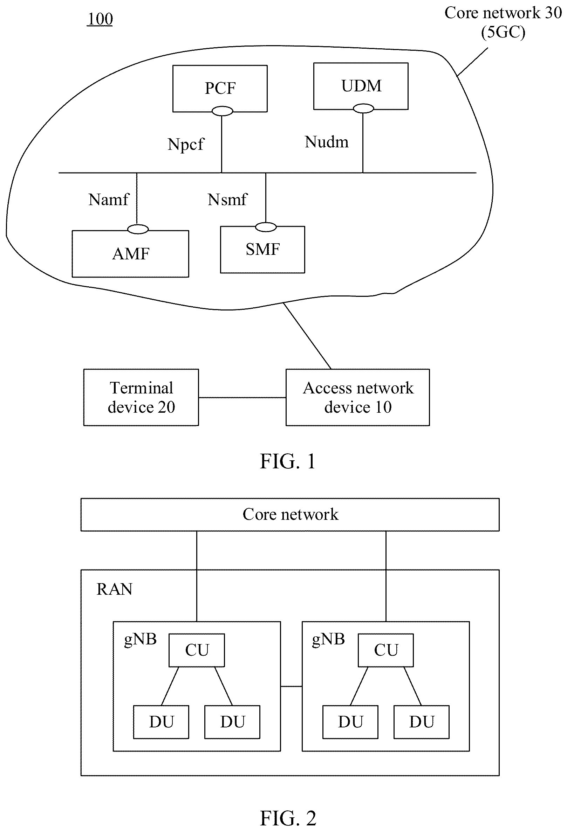

FIG. 1 is a diagram of a communication system 100 according to an embodiment of this application. As shown in FIG. 1, a communication system 100 includes an access network device 10, a terminal device 20, and a core network 30. In the communication system, the terminal device 20 is connected to the access network device 10, and the access network device 10 is connected to the core network 30. The terminal device 20 may send uplink data/signal/information to the access network device 10, the access network device 10 may send downlink data/signal/information to the terminal device 20, the terminal device 20 may send the uplink data/signal/information to the core network 30 through the access network device 10, and the core network 30 may send the downlink data/signal/information to the terminal device 20 through the access network device 10.

A communication method provided in embodiments of this application may further relate to a device or a transmission node that is not shown in FIG. 1. This is not limited in embodiments of this application.

The communication system applied to embodiments of this application is merely an example for description, and the communication system applicable to embodiments of this application is not limited thereto. Any communication system that can implement functions of the foregoing devices is applicable to embodiments of this application.

The terminal device in embodiments of this application may be a wireless terminal device that can receive scheduling and indication information from the access network device. The terminal device may be a device that provides a user with a voice and/or data connectivity, a handheld device having a wireless connection function, or another processing device connected to a wireless modem. The terminal device in embodiments of this application may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing a user with a voice/data connectivity), for example, a handheld device or a vehicle-mounted device that has a wireless connection function. The terminal device in embodiments of this application may be a mobile phone, a tablet computer, a computer with a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control, a wireless terminal (for example, a vehicle-mounted device, an entire vehicle device, a vehicle-mounted module, or a vehicle) in internet of vehicles, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a wearable device, or the like. In addition, the terminal device may be further used in scenarios such as self-driving, telemedicine, a smart grid, transportation safety, a smart city, and a smart home.

The access network device in embodiments of this application may also be referred to as a radio access network (radio access network, RAN) device or a RAN node. A RAN may be connected to the core network. The RAN device includes but is not limited to various base stations such as a next generation NodeB (gNodeB, gNB), an evolved NodeB (evolved NodeB, eNB), or a base station device in a future evolved communication system; or may be a server, a wearable device, a vehicle-mounted device, a wireless relay node, a wireless backhaul node, a transmission point (transmission point, TP), a transmission and reception point (transmission and reception point, TRP), or the like; or may be one or a group of antenna panels (including a plurality of antenna panels) of a base station; or may be a network node that forms a base station, for example, a baseband unit (BBU) or a distributed unit (distributed unit, DU). The base station may be a macro base station, a micro base station, a picocell base station, a small cell, a relay station, a balloon station, or the like.

The core network in embodiments of this application may be a 5G core network (5G core network, 5GC), an evolved packet core (evolved packet core, EPC) network, a 3rd generation (3rd generation, 3G) core network, or a 2nd generation (2nd generation, 2G) core network. In FIG. 1, an example in which the core network 30 is a 5GC is used for description. The 5GC includes but is not limited to the following core network devices: an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, and the like. It may be understood that functions of these network elements may be integrated into one device or separately disposed on a plurality of devices. Npcf, Nudm, Namf, and Nsmf in FIG. 1 are interface sequence numbers. For more descriptions of network elements included in the 5GC and meanings of these interface sequence numbers, refer to definitions in the 3rd generation partnership project (3rd generation partnership project, 3GPP) technical standard (technical standards, TS) 23.501.

It may be understood that all or some functions of the access network device, the core network device, or the terminal device in this application may alternatively be implemented by using a software function running on hardware, or may be implemented by using an instantiated virtualization function on a platform (for example, a cloud platform).

FIG. 2 is a diagram of an architecture of an access network device according to an embodiment of this application. As shown in FIG. 2, the access network device in this embodiment of this application may include a central unit (central unit, CU) and/or a distributed unit (distributed unit, DU). It may be understood that the access network device is divided into the CU and the DU from the perspective of logical functions. The CU and the DU may be physically separated or deployed together. A plurality of DUs may share one CU. One DU may alternatively be connected to a plurality of CUs (not shown in FIG. 2). The CU and the DU may be connected through an interface, for example, an F1 interface. The CU and the DU may be divided based on a protocol layer of a wireless network. In a possible division manner, the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that processing function division of the CU and the DU based on the protocol layers is merely an example, and the CU and the DU may be divided in another manner. For example, the CU or the DU may be divided into functions of more protocol layers than those in the foregoing division manner. For example, the CU or the DU may be alternatively divided into some processing functions of the protocol layers in the foregoing division manner.

In a design, functions of the CU or the DU may be divided based on a service type or another system requirement. For example, division is performed based on a delay. Functions whose processing time meets a delay requirement are set in the DU for implementation, and functions that do not meet the delay requirement are set in the CU for implementation.

In another design, the CU may alternatively have one or more functions of the core network. One or more CUs may be disposed together or separately. For example, the CUs may be disposed on a network side for ease of centralized management. The DU may have a plurality of radio frequency functions, or the radio frequency functions may be disposed remotely.

Functions of the CU may be implemented by one entity or different entities. For example, the functions of the CU may be further divided. For example, a control plane (control plane, CP) and a user plane (user plane, UP), namely, the control plane of the CU (CU-CP) and the user plane of the CU (CU-UP), are separated. The CU-CP, the control plane of the CU, may further be of an architecture in which the CU-CP is further divided. To be specific, the CU-CP is further divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer).

In different systems, the CU (including the CU-CP and the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application.

An AI model is a module having a machine learning computing capability. In a wireless communication system, the AI module may be located in operations, administration, and maintenance (operations, administration and maintenance, OAM), or may be located in an access network device. If the access network device uses a CU-DU split architecture, the AI module may be located in a CU, or may be located in a terminal device, or may be located in a core network device, or may be independently a network element entity: AI control layer (AI control layer, AIC). If an O-RAN architecture is used, the AI module may alternatively be disposed in a RAN intelligent controller (RAN intelligent controller, RIC), and the RIC may obtain network-side and/or terminal-side information from the access network device and/or the terminal device for AI model training or inference. A training or inference result may be transmitted to a RAN node and/or the terminal device.

In the wireless communication system, the AI module may be configured to perform a series of AI computation such as model establishment, training approximation, and reinforcement learning based on input data (in the wireless communication system, the input data is generally network running data provided by the access network device or monitored by the OAM, for example, network load, channel quality, or a user plane data transmission status provided by a core network). A trained model provided by the AI module has a prediction function for a network change on a RAN side, and may be used for load prediction, terminal device path prediction, and the like. In addition, the AI module may further perform policy inference from perspectives of network energy saving, mobility optimization, and the like based on a result of predicting RAN network performance by using the trained model, to obtain a reasonable and efficient energy saving policy, mobility optimization policy, and the like.

For example, when the AI model is located in the CU, and the CP and the UP of the CU are separated, the CP may be responsible for receiving the AI model and subsequent inference and policy generation functions of the AI model. When the CU-CP is further divided into a CU-CP 1 and a CU-CP 2, the CU-CP 1 may be responsible for receiving the AI model and a subsequent inference function of the AI model, and generating specific interaction signaling, and the CU-CP 2 sends the signaling.

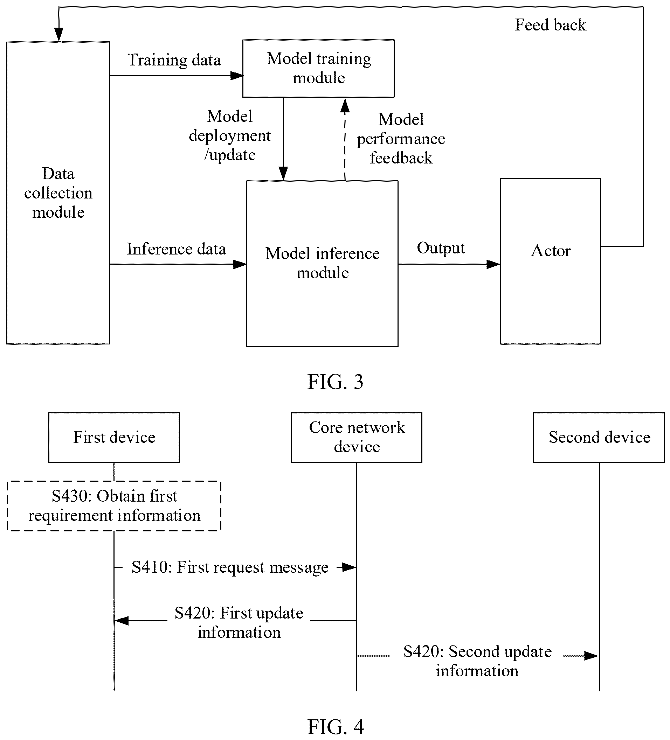

FIG. 3 is a diagram of an AI application framework according to an embodiment of this application. As shown in FIG. 3, the AI application framework includes a data collection module, a model training module, a model inference module, and an actor (Actor).

The model training module and the model inference module are examples of an AI module. For example, the network device and the terminal device shown in FIG. 1, and the CU, the DU, or another management entity of the gNB shown in FIG. 2 may input data to the data collection module. The data collection module may be used as a database for AI model training and data analysis and inference. The model training module analyzes training data output by the data collection module, provides an available AI model, and deploys the obtained AI model to the model inference module. The model inference module provides, for network running based on inference data output by the data collection module, reasonable prediction based on the AI model (obtained by the model training module through training), and feeds back performance data of the AI model to the model training module. Subsequently, the model training module continues to train the model based on the fed back performance data, and notifies the model inference module of an updated AI model. Alternatively, the model inference module indicates a network to perform policy adjustment based on the inference data output by the data collection module and the AI model. Related policy adjustment is planned by the actor in a unified manner, and policies are sent to a plurality of network entities for running. In this case, after a related policy is applied, specific performance of the network is fed back to the data collection module for storage.

The 3rd generation partnership project (3rd generation partnership project, 3GPP) introduces a plurality of AI application scenarios on the RAN side. The AI application scenarios include but are not limited to the following application scenarios: channel state information-reference signal (channel state information-reference signal, CSI-RS) feedback enhancement, beam management enhancement (beam management enhancement, BME), positioning enhancement, and the like. These application scenarios may also be referred to as AI use cases (use cases).

The AI model used in the foregoing AI application scenario is not limited to being used in only the terminal device side or being used in only the access network device side. Therefore, in a possible AI model transmission mode, the core network device may separately transmit the AI model to the terminal device and the access network device. Specifically, the core network device may send the AI model to the access network device through an NG interface, and send the AI model to the terminal device through a control plane or a user plane. After transmission of the AI model is completed, in an application process of the AI model, performance of the AI model may deteriorate due to mobility of the terminal device and a time-varying wireless environment, or the AI model cannot continue to be used due to problems such as area permission. However, the core network device cannot perceive whether performance of the AI model changes or whether the AI model can continue to be used in a use process, and consequently, the AI model cannot be updated in a timely manner, affecting application effect of the AI model in an AI use case.

Embodiments of this application provide a communication method, to effectively resolve the foregoing technical problems.

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms, and similar operations or steps in embodiments may be mutually referenced or explained in embodiments. This is not limited in this application.

Second, in this application, "at least one" means one or more, and "a plurality of" means two or more. "And/or" describes an association between associated objects, and indicates that three relationships may exist. For example, A and/or B may indicate the following three cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be singular or plural.

Third, in this application, "first", "second", and various numbers are used for differentiation for ease of description, and are not used to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

Fourth, in this application, the terms "include" and "have" and any other variants thereof are intended to cover the non-exclusive inclusion. For example, a process, method, system, product, or device that includes a list of steps or units is not necessarily limited to those expressly listed steps or units, but may include other steps or units that are not expressly listed or inherent to the process, method, product, or device.

Fifth, in this application, "indicate" may include "directly indicate" and "indirectly indicate". When a piece of indication information indicates A, the indication information may directly indicate A or indirectly indicate A, but it does not indicate that the indication information definitely carries A.

Sixth, in this application, "sending information to XX (device)" may be understood as that a destination of the information is the device, and may include directly or indirectly sending the information to the device. "Receiving information from XX (device) or receiving information from XX (device)" may be understood as that a source of the information is the device, and may include directly or indirectly receiving information from the device. Information may be necessarily processed between the source and the destination for information sending, for example, a format change. However, the destination may understand valid information from the source.

The following describes, in detail with reference to the accompanying drawings, the communication method provided in embodiments of this application. Embodiments provided in this application are applicable to any communication scenario in which a transmitter device communicates with a receiver device, for example, may be applied to the communication system shown in FIG. 1.

FIG. 4 is a schematic flowchart of a communication method according to an embodiment of this application. The method may include the following steps. For example, in this embodiment of this application, a first device is an access network device or a component (for example, a chip or a circuit) of the access network device, and a second device is a terminal device or a component (for example, a chip or a circuit) of the terminal device. Alternatively, a first device is a terminal device or a component (for example, a chip or a circuit) of the terminal device, and a second device is an access network device or a component (for example, a chip or a circuit) of the access network device.

S410: The first device sends a first request message to a core network device, where the first request message is used to request to update AI model information, and the first request message includes first requirement information for updating the AI model information. Correspondingly, the core network device receives the first request message from the first device.

The AI model information may also be referred to as related information of an AI model. Correspondingly, requesting to update the AI model information may alternatively be requesting to update the related information of the AI model. The AI model may be an AI model that is currently jointly used by the first device and the second device and that needs to be updated due to problems such as performance deterioration and/or area permission. In this embodiment of this application, the AI model requested to be updated may also be referred to as a to-be-updated AI model. The area permission means that the AI model can be used in one or more areas, for example, a same terminal device can use different AI models in different areas. The one or more areas may be a geographical area range, and may be represented by a cell group or a tracking area (tracking area).

For example, the AI model information includes structure information and parameter information of the AI model, and other types of information related to the AI model. Any information that is related to the AI model and that can be updated falls within the protection scope of the AI model information provided in embodiments of this application.

For example, the structure information and the parameter information of the AI model are obtained by disassembling the AI model. For example, the structure (structure) information may indicate information such as a specific quantity of layers (layers) of the AI model, a specific quantity of nodes (nodes) at each layer, and whether the nodes are connected to each other. The parameter (parameter) information may indicate an actual weighted parameter of every two connected nodes, and the actual weighted parameter is usually represented by a floating-point number.

It should be understood that updating the AI model information may be understood as updating partial or all information in the related information of the AI model. In this case, an AI model after update and the AI model before update may be a same AI model, or may be different AI models. Alternatively, updating the AI model information may be understood as obtaining related information of a new AI model, to replace the AI model before update with the new AI model. In this case, the AI model after update and the AI model before update may be different AI models.

For example, the first requirement information includes at least one of the following parameters: a reason for updating the AI model information, identification information of the to-be-updated AI model, or information about an expectedly updated target AI model.

For example, the first requirement information further includes another requirement related to an AI model update procedure. For example, the requirement related to the update procedure includes a transmission requirement for sending updated AI model information by the core network device to the first device and/or the second device, and/or a current hardware capability of the first device and/or the second device. The following describes parameters that may be included in the first requirement information.
(1) The reason for updating the AI model information includes, for example, that performance of the AI model does not meet a performance requirement that the first device and the second device actually need the AI model to meet, and therefore the AI model needs to be updated; or the AI model cannot be used due to an area permission problem, and therefore the AI model needs to be updated. Optionally, for different update reasons, a parameter corresponding to a reason may be added to information about the reason carried in the first requirement information.

For example, when the update reason is that the performance does not meet the requirement, a related performance parameter may be added to the update reason. The performance parameter may be, for example, accuracy of the AI model. When accuracy of the to-be-updated AI model is lower than accuracy that actually needs to be achieved (for example, that is preset or indicated), it is considered that the performance of the AI model does not meet the requirement. Accuracy refers to a ratio of a quantity of samples correctly classified by a classification model to a total quantity of samples.

For another example, when the update reason is the area permission problem, current and/or future geographical area configuration information may be added to the update reason. The future geographical area configuration information is geographical area configuration information corresponding to a location to which the terminal device may move after a period of time. A reason for adding the future geographical area configuration information is that the terminal device knows that the terminal device may move to another area in a future period of time, and because an AI model that can be used at a current location may not be used in another area after a period of time, configuration information of a geographical area at a location after the period of time may be reported in advance in the first requirement information, so that the terminal device and network devices (namely, the first device and the second device) can quickly enable the updated AI model after the terminal device moves to the another area.

(2) The identification information of the to-be-updated AI model includes an identifier of the to-be-updated AI model, or identifiers of one or more to-be-updated AI functions belonging to the AI model.

For example, in an application scenario of CSI-RS feedback enhancement, the identification information of the to-be-updated AI model includes the identifier of the to-be-updated AI model, and the identifier of the AI model indicates that the AI model may need to be updated due to reasons such as performance deterioration and/or area permission.

For another example, in an application scenario of CSI-RS feedback enhancement, the identification information of the to-be-updated AI model includes an identifier of an AI function, and the identifier of the AI function indicates an AI function for channel compression, to be specific, indicates that the AI model configured with the AI function cannot perform the AI function for channel compression.

(3) The information about the expectedly updated target AI model includes identification information of the target AI model, or structure information or parameter information of the target AI model. The target AI model herein may be understood as an expectedly updated AI model that is to be used.

The expectedly updated AI model that is to be used may be an AI model generated after partial or all information in to-be-updated AI model information is updated, or the to-be-updated AI model may be replaced with a new AI model.

For example, if the to-be-updated AI model is an AI model #1, when the information about the expectedly updated target AI model includes the identification information of the target AI model, and the identification information indicates an AI model #2, it may be understood that the AI model #1 is expected to be replaced with the AI model #2.

For example, when the information about the expectedly updated target AI model includes only parameter information #1, it may be understood that only a parameter of the to-be-updated AI model is expected to be modified based on the parameter information #1, and other information of the to-be-updated AI model is not changed.

It may be understood that, if the first requirement information expects to update partial information in the AI model information, the updated AI model information described in this embodiment of this application includes new information that replaces and corresponds to the partial information in the to-be-updated AI model information. For example, if the first requirement information indicates to update the structure information and the parameter information in the AI model information, the updated AI model information includes new structure information and new parameter information that replaces and corresponds to the structure information and the parameter information in to-be-updated AI.

It may be understood that, if the first requirement information expects to replace the to-be-updated AI model with a new AI model, the updated AI model information described in this embodiment of this application includes all information of the new AI model.

(4) A transmission requirement of a device #1 (for example, the first device or the second device) includes a related process requirement that the device #1 expects the core network device to complete transmission of the updated AI model information.

Optionally, the transmission requirement includes requirements such as a transmission delay and a capacity. For example, the transmission delay means that the device #1 expects to complete transmission of the updated AI model information within a specific delay (or the device #1 specifies start time and/or end time of transmission of the core network device). The capacity refers to a data volume that can be transmitted and that can be accepted by the device #1.

Optionally, the transmission requirement may be a unified requirement of the first device and the second device, or the transmission requirement may separately include a transmission requirement of the access network device and a transmission requirement of the terminal device.

Optionally, the transmission requirement includes indication information of a transmission mode. For example, the indication information indicates a transmission mode in which the core network device transmits the updated AI model information to the terminal device. The transmission mode includes, for example, user plane data transmission, control plane network attached storage (network attached storage, NAS) signaling transmission, or hybrid transmission of user plane data and control plane NAS signaling. For example, when hybrid transmission is used, updated structure information may be transmitted by using control plane NAS signaling, and updated parameter information may be transmitted by using user plane data.

(5) A current hardware capability of the device #1 is a hardware capability that can be currently applied to processing an AI-related computing task by the device #1, and includes but is not limited to information such as available storage space, used storage space, current energy consumption, remaining battery level, central processing unit (central processing unit, CPU) overheads, available computing power, and an AI model or an AI function that can be supported.

In an implementation, before S410, the method further includes S430.

S430: The first device obtains the first requirement information.

It should be noted that, in this application, the first device or the second device may determine whether the AI model information needs to be updated. If it is determined that the AI model information does not need to be updated, the first device does not need to obtain the first requirement information, does not perform S410 and S420, and the first device and the second device continue to use or stop using the current AI model. If it is determined that the AI model information needs to be updated, the first device needs to obtain the first requirement information, and continues to perform S410 and S420 based on the obtained first requirement information.

For example, the first device may determine the first requirement information, or the first device determines the first requirement information through negotiation with the second device. The following provides several specific implementations of determining that the first device obtains the first requirement information.

Manner 1: The first device initiates an AI model update request to the second device; the first device finally determines, based on feedback from the second device, whether to update the AI model; and when the first device determines to update the AI model, the first device obtains the first requirement information.

The first device determines that the current AI model needs to be updated. The first device sends a model update request message to the second device, where the update request message includes requirement information (referred to as requirement information #1 for short below) that is determined by the first device and that is for updating the AI model. For example, the requirement information #1 may include at least one of the following parameters: a reason for updating the AI model information, identification information of the to-be-updated AI model, or information about an expectedly updated target AI model. For example, the requirement information #1 may further include another requirement related to an update procedure, and the another requirement related to the update procedure may be a transmission requirement for sending the updated AI model information by the core network device to the first device and/or a current hardware capability of the first device.

Optionally, the second device may directly send an update request response message to the first device, where the update request response message indicates that the model update request message is accepted. In this scenario, the requirement information #1 may be understood as the first requirement information in S410. For example, the update request response message may be indicated by one bit (bit). A value 1 of the bit indicates that the model update request message is accepted, a value 0 of the bit indicates that the model update request message is rejected; and vice versa.

Optionally, the second device may choose to feed back, to the first device, requirement information (referred to as requirement information #2 for short below) for updating the AI model. For example, the second device may determine the requirement information #2 based on collected measurement information, and feed back the requirement information #2 to the first device. The first device receives the requirement information #2 fed back by the second device, and finally determines, based on the requirement information #2, the requirement information (namely, the first requirement information) for updating the AI model. Then, the first device sends the first requirement information to the second device. For example, the requirement information #2 may include the information about the expectedly updated target AI model. For example, the requirement information #2 may further include another requirement related to an update procedure, and the another requirement related to the update procedure may be a transmission requirement for sending the updated AI model information by the core network device to the second device and/or a current hardware capability of the second device.

It should be noted that, for specific descriptions of a parameter included in any requirement information described in this application, refer to the descriptions of the corresponding parameter in the first requirement information in S410.

Manner 2: The second device initiates an AI model update request to the first device; the first device finally determines, based on the update request sent by the first device, whether to update the AI model; and when the first device determines to update the AI model, the first device obtains the first requirement information.

The second device determines that the current AI model needs to be updated. The second device sends a model update request message to the first device, where the request message includes requirement information (referred to as requirement information #3 for short below) that is determined by the second device and that is for updating the AI model. For example, the requirement information #3 may include at least one of the following parameters: a reason for updating the AI model information, identification information of the to-be-updated AI model, or information about an expectedly updated target AI model. For example, the requirement information #3 may further include another requirement related to an update procedure, and the another requirement related to the update procedure may be a transmission requirement for sending the updated AI model information by the core network device to the second device and/or a current hardware capability of the second device. Then, after receiving the model update request message from the second device, the first device determines whether a procedure of updating the AI model information needs to be initiated to the core network device, and notifies the second device of a decision result. When the first device determines that the procedure of updating the AI model information needs to be initiated to the core network device, the decision result includes requirement information (namely, the first requirement information) that is for updating the AI model and that is finally determined by the first device based on the requirement information #3.

Manner 3: The second device initiates an AI model update request to the first device; the second device finally determines, based on feedback from the first device, whether to update the AI model; and when the second device determines to update the AI model, the first device obtains the first requirement information from the second device. For Manner 3, refer to the descriptions in Manner 1. Only the first device in Manner 1 is replaced with the second device, and the second device is replaced with the first device. Details are not described herein again.

Manner 4: The first device initiates an AI model update request to the second device; the second device finally determines, based on the update request sent by the first device, whether to update the AI model; and when the second device determines to update the AI model, the first device obtains the first requirement information from the second device. Similarly, for Manner 4, refer to the descriptions in Manner 2. Only the first device in Manner 2 is replaced with the second device, and the second device is replaced with the first device. Details are not described herein again.

It may be understood that, if the AI model needs to be updated, both the first device and the second device may reach an agreement on the requirement information (namely, the first requirement information) for updating the AI model in the foregoing implementations, and both the first device and the second device specify a specific update requirement.

In the foregoing implementation, if the first device is a gNB, a gNB-CP, a gNB-CU-CP, or a gNB-CU-CP 1 may generate information exchanged with the terminal device. Correspondingly, the gNB-CP, the gNB-CU-CP, or a gNB-CU-CP 2 sends the generated exchange information to the terminal device.

S420 continues to be performed after S410.

S420: The core network device sends first update information to the first device, and sends second update information to the second device, where the first update information and the second update information are obtained based on the first requirement information or second requirement information, and the second requirement information is requirement information that is for updating the AI model information and that is obtained by the first device through negotiation with the core network device based on the first requirement information. Correspondingly, the first device receives the first update information from the core network device, and the second device receives the second update information from the core network device.

It should be understood that the first update information and the second update information are used by the first device and the second device to respectively update a same to-be-updated AI model, and the first device and the second device have same understanding of the updated AI model information based on the first update information and the second update information. However, it should be noted that information included in the first update information and the second update information may be the same or different. The information included in the first update information and the second update information is described in detail later, and details are not described herein.

In the foregoing technical solution, when the AI model currently used by the first device and the second device needs to be updated due to problems such as performance deterioration and/or area permission, the first device may transmit, to the core network device, a requirement for updating the AI model; and the core network device may determine the update information based on the first requirement proposed by the first device or the second requirement information obtained through negotiation with the first device, and indicate the first device and the second device to update the AI model based on the update information. In this way, application effect of the AI model is improved.

The following first describes a process in which the core network device exchanges, with the first device, the requirement information for updating the AI model. The following provides several possible specific implementations. For details, refer to the descriptions in Manner 1 to Manner 3.

Manner 1: The core network device accepts the first requirement information proposed by the first device.

Specifically, the core network device directly accepts the first requirement information without performing any determining or modification on the first requirement information proposed by the first device.

Based on this implementation, before S420, the method further includes: The core network device sends a first request response message to the first device, where the first request response message indicates that the first requirement information is accepted. Correspondingly, the first device receives the first request response message from the core network device.

Manner 2: The core network device accepts, after performing determining, the first requirement information proposed by the first device.

Specifically, the core network device determines, based on the first requirement information, whether performance of the updated AI model can meet a subsequent performance requirement of the first device and the second device. If the performance can meet the subsequent performance requirement of the first device and the second device, the core network device accepts the first requirement information; or if the performance cannot meet the subsequent performance requirement of the first device and the second device, the core network device rejects the first requirement information (for a rejection case, refer to the descriptions in Manner 3).

In an implementation based on Manner 2, before S420, the method further includes: The core network device sends a first request response message to the first device, where the first request response message indicates that the first requirement information is accepted. Correspondingly, the first device receives the first request response message from the core network device.

Optionally, if the core network device accepts the first requirement information proposed by the first device, the core network device may further modify some requirements in the first requirement information, and feed back modified requirement information to the first device. For example, when the first device or the second device is a terminal device, in the first requirement information, the core network device is expected to transmit the updated AI model information to the terminal device through a user plane, but the core network device is currently overloaded on the user plane and cannot complete transmission of the information. In this case, the core network device suggests that the core network device transmit the updated AI model information to the terminal device through a control plane and a suggested modification reason. For another example, in the first requirement information, an expectedly updated target AI model is an AI model #1, and a target AI model that the core network device suggests modifying is an AI model #2. In this case, the first device may have the following two coping options.

Option 1: The first device accepts modified requirement information fed back by the core network device. It should be noted that the modified requirement information fed back by the core network device in the option is the second requirement information.

In an implementation based on Option 1, before S420, the method further includes: The first device sends fourth indication information to the core network device, where the fourth indication information indicates that the second requirement information is accepted. Correspondingly, the core network device receives the fourth indication information from the first device.

In another implementation based on Option 1, before S420, the method further includes: The first device sends a second request message to the core network device, where the second request message is used to request to update the AI model information, and the second request message includes the second requirement information. Correspondingly, the core network device receives the second request message from the first device. Then, the core network device sends a second request response message to the first device, where the second request response message indicates that the second requirement information is accepted. Correspondingly, the first device receives the second request response message from the core network device.

Option 2: The first device determines further modified requirement information through renegotiation with the second device based on modified requirement information (denoted as fourth requirement information) fed back by the core network device, or the first device determines further modified requirement information based on fourth requirement information. Then, the first device sends fifth indication information to the core network device, where the fifth indication information includes the further modified requirement information. Correspondingly, the core network device receives the fifth indication information from the first device. Finally, the core network device uses, as the finally determined requirement information, the further modified requirement information included in the fifth indication information.

It should be noted that the fourth requirement information in the option is requirement information different from both the first requirement information and the second requirement information. The further modified requirement information included in the fifth indication information is the first requirement information or the second requirement information. When requirement information in the fifth indication information is the first requirement information, it may be understood that the first device expects the core network device to still perform a subsequent AI model update procedure based on initial requirement information.

Manner 3: The core network device rejects, after performing determining, the first requirement information proposed by the first device, and feeds back, to the first device, requirement information modified by the core network device.

In this manner, the first device always accepts the modified requirement information fed back by the core network device. That is, the modified requirement information fed back by the core network device in Manner 3 is the second requirement information.

In an implementation based on Manner 3, before S420, the method further includes: The core network device sends a first request response message to the first device, where the first request response message indicates that the first request message is rejected (in other words, the first requirement information is rejected). Correspondingly, the first device receives the first request response message from the core network device. Then, the method further includes: The first device sends fourth indication information to the core network device, where the fourth indication information indicates that the second requirement information is accepted. Correspondingly, the core network device receives the fourth indication information from the first device. The fourth indication information and the first request response message may be separately sent, or the fourth indication information may be included in the first request response message. This is not limited in this application.

Optionally, in Option 1 to Option 3, the first device may send, to the second device, the requirement information finally confirmed with the core network device.

Based on the foregoing procedure, the core network device and the first device reach an agreement on the requirement information for updating the AI model. Then, the core network device may determine the first update information and the second update information based on the finally confirmed requirement information, and respectively indicate, by using the first update information and the second update information, the first device and the second device to receive the updated AI model information.

The following describes in detail information that may be included in the first update information and the second update information. This application provides the following three possible implementations as examples.

Implementation 1: The first update information and the second update information each include AI model information updated based on the first requirement information.

It may be understood that, in this implementation, the core network device separately sends all content in the updated AI model information to the first device and the second device, and the first device and the second device update the to-be-updated AI model based on the updated AI model information received by the first device and the second device.

Implementation 2: The first update information includes a first identifier, the second update information includes the updated AI information and the first identifier, and the first identifier indicates information that is in the updated AI model information and that is transmitted by the second device to the first device.

For example, the first identifier may include start and end bits, start and end data packet identifiers, or the like of the information that is in the updated AI model information and that is transmitted by the second device to the first device. For example, the first update information may further indicate the second device to transmit the information corresponding to the first identifier to the first device through a control plane or a user plane.

Optionally, the first identifier indicates all information in the updated AI model information sent by the second device to the first device. In this case, the implementation may be understood as follows: The core network device sends all the information in the updated AI model information to the second device, the core network device does not send the updated AI model information to the first device, the second device sends all content in the updated AI model information to the first device, the second device updates the to-be-updated AI model based on the updated AI model information sent by the core network device, and the first device updates the to-be-updated AI model based on the updated AI model information sent by the second device.

Optionally, if the first identifier indicates partial information in the updated AI model information sent by the second device to the first device, the first update information in the implementation further includes remaining information other than the information corresponding to the first identifier in the updated AI model information. In this case, the implementation may be understood as follows: The core network device sends all content in the updated AI model information to the second device, the core network device sends partial content in the updated AI model information to the first device, the second device sends remaining content in the updated AI model information to the first device, the second device updates the to-be-updated AI model based on the updated AI model information sent by the core network device, and the first device updates the to-be-updated AI model based on the updated AI model information sent by the core network device and the second device.

Optionally, the core network device may directly send the information indicated by the first identifier to the second device, and subsequently transmit the information to the first device through the second device.

In this implementation, when a transmission resource from the core network device to the first device is limited, the second device may assist the core network device in completing transmission of partial or all information in the updated AI model information. This reduces time occupied by a process in which the core network device transmits the updated AI model information to the first device, thereby improving transmission efficiency.

Optionally, in this implementation, because the second device needs to transmit, to the first device, the information indicated by the first identifier, the requirement information (denoted as third requirement information) finally confirmed by the core network device with the first device in the foregoing descriptions further includes requirement information (denoted as fifth requirement information) for forwarding the updated AI information by the second device to the first device. It may be understood that the third requirement information is the first requirement information or the second requirement information. For example, the fifth requirement information includes information in the updated AI information forwarded by the second device to the first device, and a transmission mode in which the second device sends corresponding information to the first device (for example, transmission through a user plane or a control plane).

Implementation 3: The first update information includes the updated AI information and a second identifier, the second update information includes the second identifier, and the second identifier indicates information that is in the updated AI model information and that is transmitted by the first device to the second device.

For example, the second identifier may be start and end bits, start and end data packet identifiers, or the like of the information that is in the updated AI model information and that is transmitted by the first device to the second device. For example, the second update information may further indicate the first device to transmit the information corresponding to the first identifier to the second device through a control plane or a user plane.

Optionally, if the second identifier indicates all information in the updated AI model information sent by the first device to the second device, the implementation may be understood as follows: The core network device sends all the information in the updated AI model information to the first device, the core network device does not send the updated AI model information to the second device, the first device sends all content in the updated AI model information to the second device, the first device updates the to-be-updated AI model based on the updated AI model information sent by the core network device, and the second device updates the to-be-updated AI model based on the updated AI model information sent by the first device.

Optionally, if the second identifier indicates partial information in the updated AI model information sent by the first device to the second device, the second update information in the implementation further includes remaining information other than the information corresponding to the second identifier in the updated AI model information. In this case, the implementation may be understood as follows: The core network device sends all information in the updated AI model information to the first device, the core network device sends partial content in the updated AI model information to the second device, the first device sends remaining content in the updated AI model information to the second device, the first device updates the to-be-updated AI model based on the updated AI model information sent by the core network device, and the second device updates the to-be-updated AI model based on the updated AI model information sent by the core network device and the first device.

Optionally, the core network device may directly send the information indicated by the second identifier to the first device, and subsequently transmit the information to the second device through the first device.

In this implementation, when a transmission resource from the core network device to the second device is limited, the first device may assist the core network device in completing transmission of corresponding information. This reduces time occupied by a process in which the core network device transmits the updated AI model information to the second device, thereby improving transmission efficiency.

Optionally, in this implementation, because the first device needs to transmit, to the second device, the information indicated by the second identifier, the requirement information (denoted as third requirement information) finally confirmed by the core network device with the first device in the foregoing descriptions further needs to include requirement information (denoted as sixth requirement information) for forwarding the updated AI model information by the first device to the second device. It may be understood that the third requirement information is the first requirement information or the second requirement information. For example, the sixth requirement information includes information in the updated AI model information forwarded by the first device to the second device, and a transmission mode in which the first device sends corresponding information to the second device (for example, transmission through a user plane or a control plane).

The foregoing describes the information included in the first update information and the second update information. Then, the first device and the second device update the to-be-updated AI model based on the corresponding update information.

Because there may be a control plane connection or a user plane connection between the core network device and the terminal device, the core network device may send the updated AI model information to the terminal device through the control plane or the user plane. In a transmission process, the updated AI model information is first transmitted from the core network device (for example, a corresponding core network device is an AMF when the updated AI model information is transmitted through the control plane, and a corresponding core network device may be a UPF when the updated AI model information is transmitted through the user plane) to the access network device, and then forwarded by the access network device to the terminal device, for example, the access network device transparently transmits the information to the terminal device. However, the information is invisible to the access network device, and the access network device does not know whether the core network device transmits the updated AI model information to the terminal device through the control plane or the user plane, and does not know transmission progress of the information. Therefore, to enable the AI model to be immediately put into use after update is completed, to improve system performance, the first device and the second device may obtain transmission progress of updated AI model information of each other.

Optionally, the transmission progress may be represented by a percentage of a transmitted data volume, an estimated remaining time length for completing transmission, an estimated time point for completing transmission, a quantity of bits of a transmitted data volume, a quantity of transmitted data packets, or the like. This is not limited in this solution. The following provides two possible specific implementations of obtaining the transmission progress.

Manner 1: The first device and the second device directly exchange with each other to obtain transmission progress of each other.

For example, when exchanging with each other to determine the requirement information for updating the AI model, the first device and the second device may indicate each other to send the transmission progress to each other; or when sending the first update information and the second update information to the first device and the second device, the core network device may indicate to send the transmission progress to each other; or the core network device may indicate, at any other moment, the first device and the second device to exchange the transmission progress; or the first device and the second device may actively indicate the transmission progress to each other. This is not limited in this solution.

Optionally, if the core network device sends partial or all content in the updated AI model information to the first device and/or the second device, the first device and the second device may first obtain transmission progress of corresponding information from the core network device, and then, the first device and the second device exchange current transmission progress of the first device and the second device. For example, the second device sends transmission progress of the second device to the first device. In this case, the method may further include: The second device sends second indication information to the first device, where the second indication information indicates first transmission progress, and the first transmission progress is transmission progress of information that is in the updated AI model information and that is transmitted by the core network device to the second device.

Optionally, if a device #1 sends partial or all content in the updated AI model information to a device #2, the device #1 may obtain transmission progress of corresponding information currently sent to the device #2, and the device #1 may send the transmission progress of the corresponding information to the device #2. The device #1 is the first device, and the device #2 is the second device; or the device #1 is the second device, and the device #2 is the first device. For example, the first device needs to send the information corresponding to the second identifier to the second device. In this case, the method may further include: The first device sends first indication information to the second device, where the first indication information indicates transmission progress of the information corresponding to the second identifier.

Manner 2: The core network device indicates transmission progress of each other to the first device and the second device.

In this implementation, if the core network device sends partial or all content in the updated AI model information to the first device and/or the second device, the method may further include: The core network device sends third indication information to the first device, where the third indication information indicates first transmission progress, and the first transmission progress is transmission progress of information that is in the updated AI model information and that is transmitted by the core network device to the second device; and/or the core network device sends sixth indication information to the second device, where the sixth indication information indicates second transmission progress, and the second transmission progress is transmission progress of information that is in the updated AI model information and that is transmitted by the core network device to the first device.

For example, in this application, the device #1 may request to obtain current transmission progress of a device #2 from the core network device, or the core network device may actively indicate current transmission progress of a device #2 to a device #1. The device #1 is the first device, and the device #2 is the second device; or the device #1 is the second device, and the device #2 is the first device.

In the foregoing implementation, the first device and the second device know transmission progress of content in the current updated AI model information of each other, so that the first device and the second device can quickly enable the updated AI model after the AI model is updated.

It should be understood that sequence numbers of the processes do not mean an execution sequence. The execution sequence of the processes should be determined according to functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by the devices (for example, the core network device and the first device) may alternatively be implemented by a component (for example, a chip or a circuit) of the device.

The method provided in embodiments of this application is described above in detail with reference to FIG. 1 to FIG. 4. The foregoing method is mainly described from a perspective of interaction between the core network device and the first device. It may be understood that, to implement the foregoing functions, the core network device and the first device include a corresponding hardware structure and/or a corresponding software module for performing each function.

A person skilled in the art may be aware that, with reference to the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of this application.

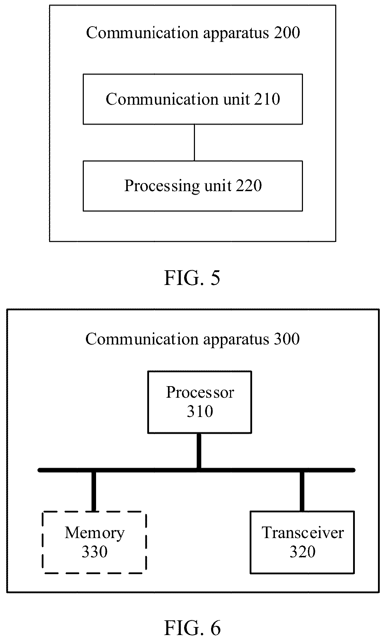

The following describes a communication apparatus according to an embodiment of this application in detail with reference to FIG. 5 and FIG. 6. It should be understood that descriptions of apparatus embodiments correspond to the descriptions of the method embodiments. Therefore, for content that is not described in detail, refer to the foregoing method embodiments. For brevity, some content is not described again. In embodiments of this application, the core network device or the first device may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used. An example in which each functional module is obtained through division based on each corresponding function is used below for description.

The foregoing describes in detail the data transmission method provided in this application, and the following describes communication apparatuses provided in this application. In a possible implementation, the apparatus is configured to implement steps or procedures corresponding to the first device in the foregoing method embodiments. In another possible implementation, the apparatus is configured to implement steps or procedures corresponding to the core network device in the foregoing method embodiments.

FIG. 5 is a block diagram of a communication apparatus 200 according to an embodiment of this application. As shown in FIG. 5, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement steps or procedures performed by the first device in the foregoing method embodiments. The processing unit 220 is configured to perform processing-related operations of the first device in the foregoing method embodiments, and the communication unit 210 is configured to perform sending-related operations of the first device in the foregoing method embodiments.

In another possible design, the apparatus 200 may implement steps or procedures performed by the second device in the foregoing method embodiments. The communication unit 210 is configured to perform receiving-related operations of the second device in the foregoing method embodiments, and the processing unit 220 is configured to perform processing-related operations of the second device in the foregoing method embodiments.

In still another possible design, the apparatus 200 may implement steps or procedures performed by the core network device in the foregoing method embodiments. The communication unit 210 is configured to perform receiving-related operations of the core network device in the foregoing method embodiments, and the processing unit 220 is configured to perform processing-related operations of the core network device in the foregoing method embodiments.

It should be understood that the apparatus 200 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the first device in the foregoing embodiments, and may be configured to perform procedures and/or steps performed by the first device in the foregoing method embodiments; or the apparatus 200 may be specifically the second device in the foregoing embodiments, and may be configured to perform procedures and/or steps performed by the second device in the foregoing method embodiments; or the apparatus 200 may be specifically the core network device in the foregoing embodiments, and may be configured to perform procedures and/or steps performed by the core network device in the foregoing method embodiments. To avoid repetition, details are not described herein again.

The apparatus 200 in the foregoing solutions has a function of implementing corresponding steps performed by the first device in the foregoing method, or the apparatus 200 in the foregoing solutions has a function of implementing corresponding steps performed by the second device in the foregoing method, or the apparatus 200 in the foregoing solutions has a function of implementing corresponding steps performed by the core network device in the foregoing method. The function may be implemented by hardware, or may be implemented by hardware executing corresponding software. The hardware or software includes one or more modules corresponding to the foregoing function. For example, the communication unit may be replaced with a transceiver (for example, a sending unit in the communication unit may be replaced with a transmitter, and a receiving unit in the communication unit may be replaced with a receiver), and another unit like the processing unit may be replaced with a processor, to separately perform the sending/receiving operations and the processing-related operations in the method embodiments.

In addition, the communications unit may alternatively be a transceiver circuit (for example, may include a receiving circuit and a sending circuit), and the processing unit may be a processing circuit. In this embodiment of this application, the apparatus in FIG. 5 may be the first device, the second device, or the core network device in the foregoing embodiments, or may be a chip or a chip system, for example, a system on a chip (system on a chip, SoC). The communication unit may be an input/output circuit or a communication interface. The processing unit is a processor, a microprocessor, or an integrated circuit integrated on the chip. This is not limited herein.

FIG. 6 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the first device in the foregoing method embodiments. In another possible implementation, the apparatus 300 is configured to implement procedures and steps corresponding to the second device in the foregoing method embodiments. In another possible implementation, the apparatus 300 is configured to implement procedures and steps corresponding to the core network device in the foregoing method embodiments.

It should be understood that the apparatus 300 may be specifically the first device, the second device, or the core network device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the first device, the second device, or the core network device in the foregoing method embodiments. Optionally, the memory 330 may include a read-only memory and a random access memory, and provide instructions and data for the processor. A part of the memory may further include a non-volatile random access memory. For example, the memory may further store information about a device type. The processor 310 may be configured to execute the instructions stored in the memory, and when the processor 310 executes the instructions stored in the memory, the processor 310 is configured to perform steps and/or procedures corresponding to the first device, the second device, or the core network device in the method embodiments.

In an implementation process, the steps in the foregoing method may be implemented by using an integrated logic circuit of hardware in a processor, or by using instructions in a form of software. The steps in the method disclosed with reference to embodiments of this application may be directly performed by a hardware processor, or may be performed by a combination of hardware and a software module in the processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using an integrated logic circuit of hardware in the processor, or by using instructions in a form of software. The processor may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by a combination of hardware and a software module in a decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing method in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and method described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions, and when the computer instructions are run on a computer, the operations and/or the procedures performed by the first device, the core network device, or the second device in the method embodiments of this application are performed.

This application further provides a computer program product. The computer program product includes computer program code or instructions, and when the computer program code or the instructions are run on a computer, the operations and/or the procedures performed by the first device, the core network device, or the second device in the method embodiments of this application are performed.

In addition, this application further provides a chip, and the chip includes a processor. A memory configured to store a computer program is disposed independent of the chip. The processor is configured to execute the computer program stored in the memory, to perform the operations and/or the processing performed by the first device, the core network device, or the second device in any method embodiment.

Further, the chip may include a communication interface. The communication interface may be an input/output interface, an interface circuit, or the like. Further, the chip may include the memory.

In addition, this application further provides a communication system. The communication system includes the first device and the core network device in embodiments of this application. Optionally, the communication system further includes the second device in embodiments of this application.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it shall not be considered that the implementation goes beyond the scope of this application. It may be clearly understood by a person skilled in the art that, for the purpose of convenient and brief description, for detailed working processes of the foregoing system, apparatuses, and units, refer to corresponding processes in the foregoing method embodiments. Details are not described herein again. In several embodiments provided in this application, it should be understood that the disclosed system, apparatuses, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate components may or may not be physically separate, and parts displayed as units may or may not be physical units, may be located at one location, or may be distributed on a plurality of network units. Some or all of the units may be selected based on an actual requirement to achieve the objectives of the solutions in embodiments. In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, for example, a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, in this application, both "when" and "if" mean that a network element performs corresponding processing in an objective situation, but do not constitute a limitation on time, do not require the network element to necessarily have a determining action during implementation, and do not mean other limitations either.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is performed by the first device, and the method comprises:
sending a first request message to a core network device, wherein the first request message is used to request to update artificial intelligence AI model information, and the first request message comprises first requirement information for updating the AI model information; and
receiving first update information from the core network device, wherein the first update information is obtained based on the first requirement information or second requirement information, and the second requirement information is requirement information that is for updating the AI model information and that is obtained by the first device through negotiation with the core network device based on the first requirement information.

2. The method according to claim 1, wherein the first update information comprises a first identifier, and the first identifier indicates information that is in updated AI model information and that is transmitted by a second device to the first device.

3. The method according to claim 2, wherein when the information indicated by the first identifier is partial information in the updated AI model information, the first update information further comprises remaining information other than the information corresponding to the first identifier in the updated AI model information.

4. The method according to claim 1, wherein the first update information comprises the updated AI model information.

5. The method according to claim 4, wherein the first update information further comprises a second identifier, and the second identifier indicates information that is in the updated AI model information and that is transmitted by the first device to a second device.

6. The method according to claim 5, wherein the method further comprises:
sending first indication information to the second device, wherein the first indication information indicates transmission progress of the information corresponding to the second identifier.

7. The method according to any one of claims 1 to 6, wherein the method further comprises:
receiving second indication information from the second device, or receiving third indication information from the core network device, wherein the second indication information or the third indication information indicates first transmission progress, and the first transmission progress is transmission progress of information that is in the updated AI model information and that is transmitted by the core network device to the second device.

8. The method according to any one of claims 1 to 7, wherein the first update information is determined based on the second requirement information, and the method further comprises:
receiving the second requirement information from the core network device; and
sending fourth indication information to the core network device, wherein the fourth indication information indicates that the second requirement information is accepted.

9. The method according to claim 8, wherein the method further comprises:
receiving a first request response message from the core network device, wherein the first request response message indicates that the first request message is rejected.

10. The method according to any one of claims 1 to 7, wherein the method further comprises:
receiving a first request response message from the core network device, wherein the first request response message indicates that third requirement information is accepted, and the third requirement information is requirement information corresponding to the first update information.

11. The method according to claim 10, wherein the method further comprises:
receiving fourth requirement information from the core network device, wherein the fourth requirement information is requirement information that is for updating the AI model information and that is determined based on the first requirement information;
determining the third requirement information through negotiation with the second device based on the fourth requirement information; and
sending fifth indication information to the core network device, wherein the fifth indication information comprises the third requirement information.

12. The method according to any one of claims 1 to 11, wherein the method further comprises:
determining the first requirement information, or determining the first requirement information through negotiation with the second device.

13. The method according to any one of claims 1 to 11, wherein the first requirement information comprises at least one of the following parameters:
a reason for updating the AI model information, identification information of a to-be-updated AI model, information about an expectedly updated target AI model, or a transmission mode in which the core network device sends the updated AI model information to the first device and/or the second device.

14. The method according to any one of claims 1 to 13, wherein the first device is an access network device, or the first device is a terminal device.

15. The method according to any one of claims 2, 5 to 7, and 11 to 13, wherein the first device is an access network device, and the second device is a terminal device; or the first device is a terminal device, and the second device is an access network device.

16. A communication method, wherein the method is performed by a core network device, and the method comprises:
receiving a first request message from the first device, wherein the first request message is used to request to update artificial intelligence AI model information, and the first request message comprises first requirement information for updating the AI model information; and
sending first update information to the first device, and sending second update information to a second device, wherein the first update information and the second update information are separately obtained based on the first requirement information or second requirement information, and the second requirement information is requirement information that is for updating the AI model information and that is obtained by the first device through negotiation with the core network device based on the first requirement information.

17. The method according to claim 16, wherein the first update information and the second update information each comprise updated AI model information.

18. The method according to claim 16, wherein the first update information comprises a first identifier, the second update information comprises updated AI model information and the first identifier, and the first identifier indicates information that is in the updated AI model information and that is transmitted by the second device to the first device.

19. The method according to claim 18, wherein when the information indicated by the first identifier is partial information in the updated AI model information, the first update information further comprises remaining information other than the information corresponding to the first identifier in the updated AI model information.

20. The method according to claim 16, wherein the first update information comprises updated AI model information and a second identifier, the second update information comprises the second identifier, and the second identifier indicates information that is in the updated AI model information and that is transmitted by the first device to the second device.

21. The method according to claim 20, wherein when the information indicated by the second identifier is partial information in the updated AI model information, the second update information further comprises remaining information other than the information corresponding to the second identifier in the updated AI model information.

22. The method according to any one of claims 16 to 21, wherein the method further comprises:
sending third indication information to the first device, wherein the third indication information indicates first transmission progress, and the first transmission progress is transmission progress of information that is in the updated AI model information and that is transmitted by the core network device to the second device; and/or
sending sixth indication information to the second device, wherein the sixth indication information indicates second transmission progress, and the second transmission progress is transmission progress of information that is in the updated AI model information and that is transmitted by the core network device to the first device.

23. The method according to any one of claims 16 to 22, wherein if the update information is determined based on the second requirement information, the method further comprises:
sending the second requirement information to the first device; and
receiving fourth indication information from the first device, wherein the fourth indication information indicates that the second requirement information is accepted.

24. The method according to claim 23, wherein the method further comprises:
sending a first request response message to the first device, wherein the first request response message indicates that the first request message is rejected.

25. The method according to any one of claims 16 to 22, wherein the method further comprises:
sending a first request response message to the first device, wherein the first request response message indicates that third requirement information is accepted, and the third requirement information is requirement information corresponding to the first update information.

26. The method according to claim 25, wherein the method further comprises:
sending fourth requirement information to the first device, wherein the fourth requirement information is requirement information that is for updating the AI model information and that is determined based on the first requirement information; and
receiving fifth indication information from the first device, wherein the fifth indication information comprises the third requirement information.

27. The method according to any one of claims 16 to 26, wherein the first requirement information comprises at least one of the following parameters:
a reason for updating the AI model information, identification information of a to-be-updated AI model, information about an expectedly updated target AI model, or a transmission mode in which the core network device sends the updated AI model information to the first device and/or the second device.

28. The method according to any one of claims 16 to 27, wherein the first device is an access network device, and the second device is a terminal device; or the first device is a terminal device, and the second device is an access network device.

29. A communication apparatus, comprising a module or a unit configured to perform the method according to any one of claims 1 to 15.

30. A communication apparatus, comprising a module or a unit configured to perform the method according to any one of claims 16 to 28.

31. A communication apparatus, wherein the apparatus comprises a processor, the processor is coupled to a memory, the memory stores instructions, and when the instructions are run by the processor, the processor is enabled to perform the method according to any one of claims 1 to 15.

32. A communication apparatus, wherein the apparatus comprises a processor, the processor is coupled to a memory, the memory stores instructions, and when the instructions are run by the processor, the processor is enabled to perform the method according to any one of claims 16 to 28.

33. A communication system, comprising a first device and a core network device, wherein the first device is configured to perform the method according to any one of claims 1 to 15, and the core network device is configured to perform the method according to any one of claims 16 to 28.

34. A computer-readable storage medium, wherein the computer-readable storage medium is configured to store a computer program, and when the computer program is run on a computer, the computer is enabled to perform the method according to any one of claims 1 to 15, or the computer is enabled to perform the method according to any one of claims 16 to 28.
